# EUROPEAN PATENT SPECIFICATION

(11) **EP 1 217 799 B1**
(45) Date of publication and mention of the grant of the patent: **24.01.2007**
(21) Application number: 00128216.9
(22) Date of filing: 22.12.2000
(51) Int. Cl.: H04L 29/06, G06F 9/46

(54) **Server side execution of application modules in a client and server system**
Serverseitige Ausführung von Anwendungsmodulen in einem Client/Server-System
Exécution côté serveur de modules d'application dans un système client-serveur

(43) Date of publication of application: 26.06.2002
(73) Proprietor: SUN MICROSYSTEMS, INC., Palo Alto, California 94303 (US)
(72) Inventor: Eilers, Bernd, 21107 Hamburg (DE); Laux, Thorsten O., 20099 Hamburg (DE)
(74) Representative: HOFFMANN EITLE

(56) References cited:
- WO-A-00/62161
- WO-A-99/44123
- EVANS E ET AL: "Using Java applets and CORBA for multi-user distributed applications" IEEE INTERNET COMPUTING,US,IEEE SERVICE CENTER, PISCATAWAY, NJ, vol. 1, no. 3, 1 May 1997 (1997-05-01), pages 43-55, XP002080603 ISSN: 1089-7801
- FINSTERWALDER R: "A generic client/server architecuture for distributed Web-based simulation experimentation" CACSD. CONFERENCE PROCEEDINGS. IEEE INTERNATIONAL SYMPOSIUM ON COMPUTER-AIDED CONTROL SYSTEM DESIGN (CAT. NO.00TH8537), CACSD. CONFERENCE PROCEEDINGS. IEEE INTERNATIONAL SYMPOSIUM ON COMPUTER-AIDED CONTROL SYSTEMS DESIGN, ANCHORAGE, AK, USA, 25-27 SE, pages 185-189, XP002168796 2000, Piscataway, NJ, USA, IEEE, USA ISBN: 0-7803-6566-6
- LAW K C K ET AL: "Web-enabling legacy applications" PROCEEDINGS 1998 INTERNATIONAL CONFERENCE ON PARALLEL AND DISTRIBUTED SYSTEMS (CAT. NO.98TB100250), PROCEEDINGS OF ICPADS'98 - INTERNATIONAL CONFERENCE ON PARALLEL AND DISTRIBUTED SYSTEMS, TAINAN, TAIWAN, 14-16 DEC. 1998, pages 218-225, XP002168797 1998, Los Alamitos, CA, USA, IEEE Comput. Soc, USA ISBN: 0-8186-8603-0

## Description

### Field of the Invention

The present invention relates to a method and apparatus for remote processing at a client unit and a server unit in a client and server system.

### Background of the Invention

With the availability of communication networks connecting large numbers of data processing devices, an increasing number of applications or services for users is executed involving more than a single data processing device. Applications executed on a plurality of data processing devices, so-called distributed applications, often involve an exchange of data via communication networks such as local area communication networks, e.g. company-wide intranets, or wide area networks, e.g. the Internet.

Evans et al.: Using Java applets and CORBA for multi-user distributed applications, IEEE Internet Computing, US, "IEEE Service Center, Piscataway, NJ, vol. 1, no. 3, 1 May 1997, pages 43-55, discloses a distributed application.

Distributed applications may for example include office applications as for example managing documents and data files, or may include applications for visualizing information, banking applications and similar.

A distributed application providing a service to a user may be executed involving a server data processing device and a client data processing device operated by a user. The user may, for example, launch a distributed application by entering a corresponding command at the client data processing device. Certain parts or modules of the distributed application may reside on the client data processing device and may invoke further parts or modules of the distributed application at the server data processing device.

For example, if a user wishes to edit a document, a module at the client data processing device could initialize a screen of a display unit at the client for receiving information to be displayed and may instruct a module at the server data processing device via a network to retrieve the requested document and to process the document as required, e.g. to bring it into a screen format, and to return information to the client data processing device to be displayed at a client display.

In the above outlined example processing operations for the requested distributed application may to a large extent be executed at the server data processing device, allowing the client data processing device to maintain fewer resources, i.e. to maintain less storage space reserved for application program software, and to provide less processing capabilities. This may be particularly advantageous in case the client data processing device is a small unit such as a mobile device.

Even though the above described example provides an advantage over maintaining all resources at a client data processing device, it is still required that the parts or modules of the distributed application required for handling data and/or instructions at the client data processing device are maintained locally at the client data processing device, as otherwise a required communication between the client data processing device and the server data processing device could not be established or maintained.

For example, it may still be required that the client data processing device maintains potentially larger modules for visualizing information, playback of information, and similar and thus the client may still have to allocate considerable resources for storing corresponding application program modules and/or providing the necessary processing capabilities.

Further, if the distributed application is modified, e.g. if a new release version becomes available, the parts of the distributed application program residing at the client data processing device need to be updated in a potentially expensive, time consuming and cumbersome process.

A straightforward approach to solve this problem would be to divide application modules of the distributed application at the client data processing device into smaller partitions and to transfer at least some of the partitions to the server data processing device. Then, a first module could be started at the client data processing device, connecting to the server data processing device and instructing the server data processing device to execute the further modules of the distributed application, as outlined above.

However, in many distributed applications modules available for performing the required data and information handling operations at the client data processing device only stay active as long as they are needed for performing the required operations at the client data processing device. Such a module would not await the completion of the execution of a further module of the distributed application performed at the server data processing device, leading to a loss of synchronization between the individual modules of the distributed application.

### Summary of the Invention

It is therefore desired to provide a client unit and a server unit allowing to further reduce processing requirements at the client unit and it is further desirable to reduce costs in maintaining service applications updated.

The invention provides methods for remote processing according to claims 1 and 7, a program according to claim 15, a computer readable medium according to claim 16, a client unit according to claim 18, and a server unit according to claim 26.

In an embodiment of the invention a method for remote processing at a client unit in a client and server system, includes receiving from a server unit a server request to execute a first module of a service application; executing the first module of the service application at the client unit including transmitting a first client request to the server unit including an indicator of a second module of the service application, to instruct the server unit to execute the second module of the service application; receiving a completion indicator from the server unit at the client unit, to notify the client unit that the execution of the second module of the service application is completed; and releasing the first module at the client unit of the service application after the completion indicator is received.

A method for remote processing at the server unit includes generating a server request for a first module of a service application; transmitting the server request to a client unit to instruct the execution of the first module at the client unit including generating a first client request for a second module of the service application; receiving the first client request and executing the second module of the service application at the server unit; generating a completion indicator, indicating that the second module of the service application is completed; and transmitting the completion indicator to the client unit to notify the client unit that the first module of the service application may be released.

The above described operations advantageously allow to generate an instruction at the server unit instructing the client unit to start a first module of the service application. Since the first module of the service application is executed at the client unit upon the instruction from the server unit, the first module of the service application will be maintained active at the client unit until the second module of the service application executed at the server unit is completed and the completion indicator is returned to the client unit. As only then the first module of the service application is released at the client unit, a synchronization between the first module and the second module of the service application can be maintained as necessary.

This may be particularly advantageous in an environment where a service application is executed with a browser capable of activating plug-ins or applets. As the plug-ins or applets are generally unloaded whenever a new page is loaded into the browser, the above operations advantageously allow to maintain the plug-in or applet active until the servlet at the server unit is completed.

The invention allows to reduce the processing requirements at the client side and further allows to maintain and update the largest part of the service application at the server unit, eliminating the need for frequent and cumbersome update operations for updating a service application at the client unit.

The method for remote processing at a client unit may further include receiving at the client unit a user command to execute the service application; and transmitting to the server unit a second client request instructing the server unit to return to the client unit the server request to execute the first module of the service application. This allows to initiate the service application fully at the client unit

The server request may include an identifier of the second module of the service application. Thus the server unit may specify the second module, e.g. if a plurality of suitable modules are available, or may specify a specific storage location of the second module.

A communication between the server unit and the client unit may be carried out in connection with the execution of the service application prior to receiving the completion indicator at the client unit.

Prior to executing the service application it may be determined whether the service application includes the first and second module.

In a further advantageous embodiment, the server request to execute the first module of the service application may be included in a browser page and may include a URL (uniform resource locator) associated with the second module; the first module of the service application may return the URL to the server unit to instruct the server unit to execute the second module of the service application; and the completion indicator received at the client unit may be included in a response to the received URL from the server unit.

Further, the first module of the service application may be constituted by a plug-in or applet, which is started by loading the browser page in a browser application executed at the client unit; and the second module of the service application may be constituted by a servlet scripted at the server unit.

A service application may include at least one of the group consisting of
- a print operation for printing information;
- a visualization operation for visualizing information at the client unit;
- a storing operation for storing information at the client unit or at the server unit;
- a rendering operation for rendering a data file (different formats); and
- mathematical or logical operations.

A program may be provided having instructions adapted to carry out the above operations. A computer readable medium, may have a program recorded thereon, where the program is to make the computer execute the program, and a computer program product may comprise the computer readable medium.

In another embodiment a client unit for remote processing in a client and server system may include a client communication unit to receive from a server unit a server request to execute a first module of a service application; a client processing unit to execute the first module of the service application including transmitting a first client request with an indicator of a second module of the service application to the server unit, to instruct the server unit to execute the second module of the service application; wherein the client communication unit is adapted to receive a completion indicator from the server unit, indicating that the execution of the second module of the service application is completed; and the client processing unit is adapted to release the first module of the service application after the completion indicator is received.

A server unit for remote processing in a client and server system may include a server communication unit to transmit to a client unit an server request to execute a first module of a service application and to receive a first client request instructing to execute a second module of the service application; a server processing unit to execute the second module of the service application and to generate a completion indicator indicating that the execution of the second module of the service application is completed; and wherein the server communication unit is adapted to transmit the completion indicator to the client unit, to notify the client unit that the first module of the service application may be released.

Further advantageous embodiments of the invention are described in further dependent claims.

### Brief Description of the Figures

- Fig. 1: illustrates elements of a system for remote processing involving a client unit and a server unit according to an embodiment of the invention;
- Fig. 2: illustrates operations of a method for remote processing at a client unit and a server unit according to an embodiment of the invention;
- Fig. 3: illustrates operations of a method for remote processing at a client unit and a server unit according to an embodiment of the invention;
- Fig. 4: illustrates operations of a method for remote processing at a client unit according to an embodiment of the invention;
- Fig. 5: illustrates operations of a method for remote processing at a client unit and a server unit according to an embodiment of the invention; and
- Fig. 6: illustrates operations of a method for remote processing at a client unit and a server unit according to an embodiment of the invention;

### Description of the Preferred Embodiments

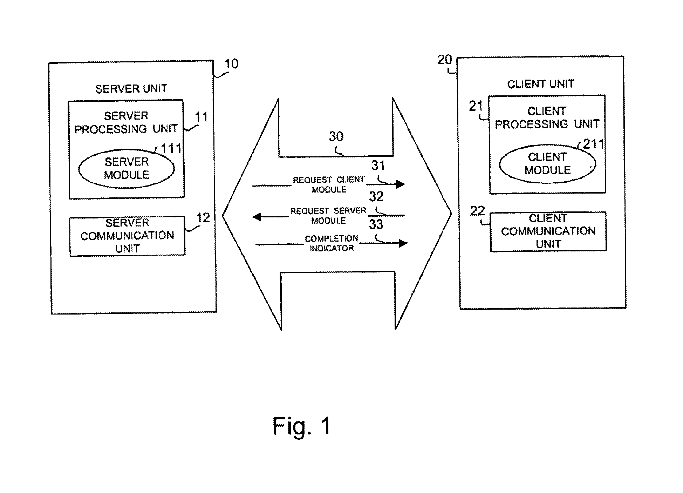

In the following an embodiment of the invention will be described with respect to Fig. 1.

Fig. 1 illustrates elements of a system for remote processing involving a client unit and a server unit according to an embodiment of the invention. A server unit 10 includes a server processing unit 11 and a server communication unit 12. The server processing unit 11 includes a server module 111 constituting part of a service application for distributed execution involving the server unit 10.

Further, Fig. 1 shows a client unit 20 including a client processing unit 21 and a client communication unit 22. The client processing unit 21 further includes a client module 211 constituting part of the service application for distributed execution involving the server unit 10 and the client unit 20.

An arrow 30 schematically illustrates a communication link between the server unit 10 and the client unit 20.

In operation, for example, the server communication unit 12 transmits to the client unit an instruction to execute the client module 211 of the service application and receives a request for executing the server module 111 of the service application. Further, the server processing unit 11 executes the server module 111 of the service application and generates a completion indicator indicating that the execution of the server module 111 of the service application is completed. The server communication unit 12 then transmits the completion indicator to the client unit, notifying the client unit that the first module of the service application may be released.

On the other hand, the client communication unit 22 of the client unit 20 in this example receives from the server unit the request to execute the client module 211 of the service application. The client processing unit executes the client module 211 of the service application including transmitting an indicator of the server module 111 of the service application to the server unit 10, to instruct the server unit 10 to execute the server module 111 of the service application. And, the client communication unit 22 receives the completion indicator from the server unit, indicating that the execution of the server module 111 of the service application is completed, and then releases the client module 211 of the service application after the completion indicator was received from the server unit 10.

The instruction for the client module 211 transmitted from the server unit 10 to the client unit 20 is illustrated by an arrow 31. Further, the request for the server module 111 generated by the client module 211 upon receiving the instruction as indicated by arrow 31 is transmitted to the server unit 10 as illustrated by an arrow 32. Finally, the completion indicator is transmitted to the client unit 20 as indicated by an arrow 33, after the execution of the server module 111 is completed at the server unit.

The above described example allows to activate the client module 211 from the server unit 10 through the instruction 31 for the client module. Accordingly, since the client module 211 is started via the server unit, the client module will remain active, after requesting the server module 111, until the server-module 111 is completed and the server unit 10 transmitted the completion indicator back to the client unit 20.

Since the service application is only partially executed at the client unit 20, computational requirements at the client unit are reduced. Thus, for example a smaller client unit having a reduced storage capability and reduced processing capabilities may be employed.

Further, since the server module can be maintained at the server unit 10, the server module can directly be serviced and updated at the server unit, eliminating the need of updating the entire service application directly at the client unit. It is noted that a service application may include a plurality of client modules and server modules.

In the following, the elements illustrated in Fig. 1 will be described in further detail.

First, an example of the client unit 20 will be described. It is noted that this example serves illustration purposes and does not limit the invention. Further examples of the client unit are possible.

The client unit 20 shown in Fig. 1 may be a general purpose data processing device, such as a personal computer, a mobile terminal such as a mobile computing device, a mobile phone or a mobile data organizer operated by a user wishing to obtain service provided by the service application.

The client processing unit 21 to execute the client module 211 of the service application may be a central data processing unit of the client unit 20 or may be a data processing unit external to the client unit 20.

The client processing unit 21 may have access to a program storage unit (not shown) for storing the client module 211 of the service application and further client modules of further service applications. The program storage unit may be located within the client unit 20 or external thereto. The storage unit may be a single unit or a distributed unit, e.g. a data base. It is understood that the client processing unit 21 may be adapted to execute a plurality of client modules of a plurality of service applications in providing at least one service to a user.

The client processing unit 21 and the client communication unit 22 may be connected by a link (not shown), which may be a communication bus internal to the client unit 20, may include an adapter to a keyboard or may include external connections.

The client communication unit 22 of the client unit 20 for communicating with the server unit 10, e.g. via a network or a dedicated communication link, may be an adapter unit capable to execute various communication protocols in order to establish and maintain a communication with the server unit 10, i.e. the server communication unit 12. The adapter unit may, for example, be a modem or terminal adapter including control software, e.g. executed at the client processing unit or at another data processing device. The client communication unit 22 may further be constituted by a specialized piece of hardware or may be realized by a general data processing unit executing corresponding program instructions. It is also possible that the client communication unit 22 is at least partially included in the client processing unit 21 executing corresponding program instructions.

The client communication unit 22 may communicate over a communication link using a communication end point specified by an address and a port number. The link may be a dedicated communication link such as a mobile communication link or a switched circuit communication link. Further, the communication link may involve a network of data processing devices such as a local area network or a wide area network or combinations thereof.

In the following, an example of the server unit 10 will be described in further detail. It is noted that this example serves illustration purposes and does not limit the invention. Further examples of the server unit are possible.

The server unit 10 may be a general purpose data processing unit, preferably a data processing unit with large resources, e.g. high processing capabilities and a large memory for storing large amounts of data. The server unit 10 may be a single unit or may be a distributed system of a plurality of servers or data processing units and may be shared by multiple users operating a plurality of client units such as client unit 20.

The server unit 10 includes the server processing unit 11 for executing the server module 111 of the service application upon request from the client module, as outlined above. Similar to the client processing unit, the server processing unit 11 may be constituted by a central processing unit of the server unit 10, but may also be constituted by a distributed central processing unit including a plurality of individual processors on one or a plurality of machines. The server processing unit 11 may have access to a storage unit for storing a plurality of server modules such as server module 111, of a plurality of service applications, in order to provide service to a plurality of users operating a plurality of client units such as the client unit 20. The storage unit may be a single unit or a distributed unit, e.g. a data base.

The server unit 10 further includes a server communication unit 12 which may correspond to the client communication unit 22. However, the server communication unit 12 may preferably be adapted to communicate with a plurality of client units such as the client unit 20, i.e., to maintain communication links to a plurality of client units.

The server processing unit 11 and the server communication unit 12 of the server unit 10 may be connected by a system bus or similar (not shown) or via external connections, for example in case the server unit 10 is constituted by a distributed system including distributed server data processing units and/or distributed server communication units.

In the following, an example of a service application including the client module and server module will be described in further detail. It is noted that the below examples serve illustration purposes and do not limit the invention. Further examples of service applications including client modules and server modules are possible.
The service application may generally be an application allowing a user operating the client unit 20 to establish a session with the server unit 10. Further, the service application may provide a user with the required tools to control the execution of a distributed application such as an editing operation, rendering operations, a banking application and further applications which may for example be needed in an office environment.

Thus, the service application may be a support application forming part of a distributed application performed under control of the user operating the client unit. However, the service application is not limited thereto, it may also be a standalone application for providing service to a user operating the client unit.

Generally, the service application may include at least one of the group consisting of
- a print operation for printing information, such as printing a document through the client unit, for example on a printer connected to the client unit;
- a visualization operation for visualizing information at the client unit;
- a storing operation for storing information at the client unit or at the server unit;
- a rendering operation for rendering a data file, i.e. converting between different formats; and
- mathematical or logical operations.

In the following an example of a print service application is outlined in further detail.

In a print service application as listed above, the document itself and processing of the document may be take place at the server unit, which may involve converting the document into a data format suitable for printing at the client unit and transmitting corresponding information to the client unit.

As in many cases the document to be printed is maintained at the server unit or at a database accessible by the server unit, operations in converting the document into a printable format may conveniently be executed at the server unit. Therefore, the server unit may advantageously provide for converting the document to be printed into a suitable format, selecting and preparing certain partitions of a document to be printed and similar. Thus, the print service application may include a server module with the above functions.

The client unit may provide for requesting execution of the server module and, for example, receiving data in a printable format and forwarding the data in the printable format to a printer connected to the client unit 20. Further, the client module may provide for further conversion operations of the received data before transfer to the printer. Thus, the print service application may include a client module with the above functions.

Further, the client may provide for receiving an instruction from the server unit to execute the client module of the print service application. As the client module is started upon a request from the server unit and itself requests the execution of the server module, the client module is maintained active at the client unit until the completion indicator from the server module is received. This maintains the synchronization between the server module and the client module, i.e., the printing operation may successfully be carried out. Maintaining the client module active may include maintaining corresponding register entries and memory allocations at the client unit, e.g. the client processing unit.

It is noted that if the client module was released before completion of the execution of the server module, synchronization can not be maintained, for example, data to be printed may be lost as the routing operations of the client module cannot be performed any longer.

In the following an example of a visualization service application is outlined in further detail.

A visualization service application may include preparing at the server unit screen contents to be provided for local display at a display unit of the client unit 20. Preparing screen contents may include rendering information such as a web page available in the worldwide web such that the information of the web page can be presented to the user of the client unit. Since client units may have a variety of display units connected thereto, e.g., various sizes, display characteristics (color, gray scale) and similar, the rendering operations may include adapting formats, converting colors into gray scale and similar.

Further, the visualization service application includes preparing the above described contents for transfer to the client unit, to receive the screen contents at the client unit and to locally display the screen contents.

Therefore, the visualization service application of a document such as a web page available on the worldwide web, may be advantageously be divided into a server module involving the above described rendering operations to adapt formats, colors and similar, whereas the client module may include functions to receive frames for local display on a display unit.

Similarly, a storing service application may be divided into a server module including operations to convert formats and similar and a client module instructing the execution of the server module and, if necessary, performing functions in routing data to be stored, for example on a local storage device accessible through the client unit.

Further, rendering operations for rendering a data file, e.g. conversion between different formats may be divided into a client module and a server module and, finally, mathematical and logical operations may also be divided into a server module and a client module.

Similar allocations of functionality may be used in further types of service applications.

In the following, a further embodiment of the invention will be described. In this example a browser is used in a session involving the client unit and the server unit. The communication between the server and client involves a computer network such as the Internet and various protocols for establishing and maintaining a communication between the server and the client, e.g., TCP/IP or similar.

The execution of the service application is performed through a browser application, as available for browsing information and performing operations in a network such as a local area network, e.g. a company-wide network, and/or a wide area network, e.g. the Internet, including the worldwide web.

A browser application is an application which provides to a user an interface for retrieving documents, performing operations on documents, as outlined above. A browser usually has access to locally stored or externally provided programs which may be constituted by client modules of a service application. However, a browser generally maintains a locally stored or externally provided application program such as a client module (plug-in, applet, active X control) active only for a certain time period. Most importantly, whenever a new page is loaded into the browser, e.g. if a user selects another page for display, the browser generally unloads a previously used program such as a client module, i.e. execution of such a program is terminated.

The invention provides means for maintaining the local program or client module active until a corresponding server module is completed. Since the execution of the client module is instructed through the server unit, making the client module to request execution of the server module, the client module will not be unloaded by the browser until the server module has completed its operation and transmitted a completion indicator to the client unit.

Further, since the instruction from the server unit to the client unit instructing the client unit to execute the client module may include an identifier of the server module, no information on the exact nature and/or location of the server module needs to be maintained at the client unit. Accordingly, updates required for updating program modules residing at the client unit may be reduced to a minimum.

Further, in the described embodiment a URL (Uniform Resource Locator) may advantageously be used. The server unit may send the browser at the client unit a page that activates the client module of the service application. The client module then in turn connects to the server unit and may request a URL from the server unit. The URL transmitted in response thereto from the server unit to the client unit may advantageously include an identifier of the server module of the service application. Upon receiving the URL at the client unit the client module transmits the URL to the server unit requesting the execution of the server module specified in the URL.

The client module, which may be a plug-in, an applet or an active X control or similar, stays active as long as the server unit does not return information in servicing the URL. Generally, a plug-in or applet stays active unit a return message to the URL, which may be data specified by the URL or similar, is received. The client module, however, waits for the completion indicator as return message to the URL and thus, since the server module only transmits the completion indicator to the client unit upon completing the server module, the client module stays active as required, allowing to maintain a synchronization between the server unit and the client unit.

For example, in a visualization service application as outlined before the following sequence of operations may occur.

In a first operation the server unit sends a browser page to the client unit including for example an icon "visualize document XYZ" and including a URL linked with the icon in the browser page containing information on the server module, e.g. a module for rendering data appropriately to adapt a display frame to a client display unit.

Upon selection of the icon included in the browser page, e.g. through a user input at the client unit, the client transmits the URL specifying the server module to the server unit.

Upon receiving the URL the server unit executes the server module, e.g. including rendering and all necessary data transmissions between the client unit and the server unit.

As the client now waits for a return message to the requested URL, the client module stays active until the completion indicator indicating completion of the server module is received at the client unit.

It is noted that the above described features and processing operations of the first and second embodiment may be realized by dedicated hardware or may be realized as programs including code instructions executed on data processing units. It is further possible that parts of the above sequence of operations is carried out in hardware, whereas other of the above processing operations are carried out using software.

It is further noted that a computer readable medium may be provided, having a program recorded thereon, or the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

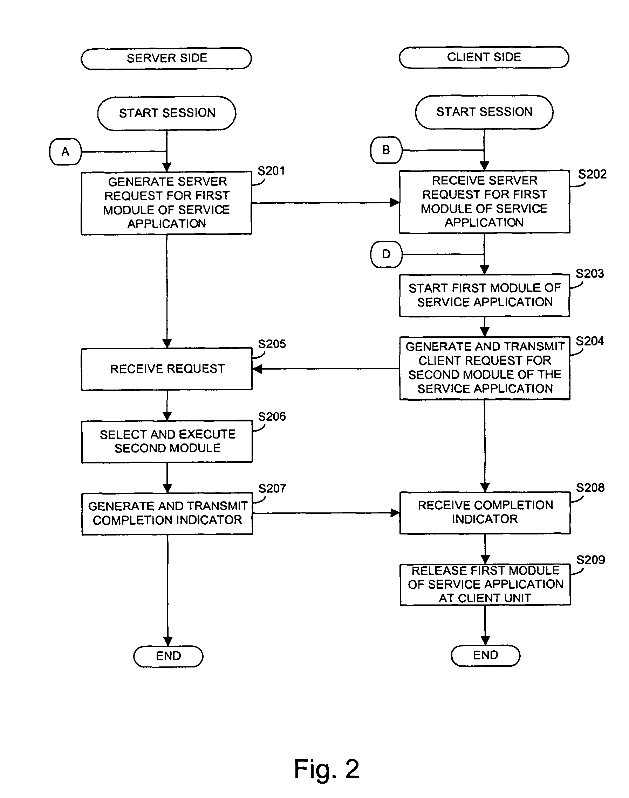

In the following a further embodiment of the invention will be described with respect to Fig. 2.

Fig. 2 illustrates operations of the method according to an embodiment of the invention allowing to execute a first module of a service application at a client unit and to execute a second module of the service application at a server unit while maintaining a synchronization in executing the service application. On the left-hand side of Fig. 2 operations to be carried out at the server side are illustrated. On the right-hand side of Fig. 2 operations to be executed at the client side are illustrated. The operations of in Fig. 2 may be performed using the system described with respect to Fig. 1, however, Fig. 2 is not limited thereto.

Initially a communication session is started involving the server unit and the client unit. This may involve establishing a communication link between the client unit and the server unit using a communication protocol and may involve the transmission of data through a dedicated communication link, a communication network or combinations thereof.

After starting the session between the client unit and the server unit in an operation S201 the server unit generates a server request indicating a first module of a service application.

As outlined before with respect to the previous embodiments, a service application is a distributed application providing a service to a user involving the client unit and the server unit. A service application may include a visualization operation for visualizing information at the client unit, may involve a print operation for printing information, for example locally at the client unit, may include a storing operation for storing information either locally at the client unit or at the server unit or at a third location, may include rendering operations, for example for converting files between different formats and preparing information for display, and may include mathematical or logical operations.

The server request of operation S201 may be generated upon initializing the session or may be triggered upon other events, e.g. client commands or similar.

The server request is received at the client side in an operation S202, and in an operation S203 the first module of the service application is started at the client unit. Starting the first module of the service application may involve analyzing the request to determine an identifier of the first module, to select the first module from a number of modules available at the client side and to load and start the first module, e.g. by a client processing unit, such as client processing unit 21 of Fig. 1. It is also possible that upon receiving and analyzing the request the client unit retrieves the first module from a remote location, for example through a local area or wide area communication network or combinations thereof.

In an operation S204 the first module generates a client request for a second module of the service application. This client request includes an identifier of the second module of the service application. This identifier of the second module may be generated by the first module or may be retrieved from another location, e.g. from a list of server modules accessible by the client unit.

However, it is also possible that information on the second module may-be already included within the server request received at the client unit in operation S202. For example, the server request could include an identifier of the second module, for example specifying a storage location of the second module at the server unit or specifying other information allowing to identify the second module. The client request is transmitted in operation S204 to the server unit, where it is received in an operation S205.

In an operation S206, at the server unit, the client request is analyzed and information identifying the second module is obtained. Using this information the second module is selected and retrieved, for example from a storage unit accessible from the server unit. The second module may be maintained at the server unit or may be maintained remote from the server unit, for example at a central database, in which case the server unit will access the database and retrieve the second module. After retrieving the second module the server unit executes the second module, e.g. using a server processing unit such as the server processing unit 12 illustrated in Fig. 1.

Executing the second module may involve a further communication between the server unit and the client unit in connection with the execution of the service application.

As outlined before, the largest part of the service application may thus effectively be executed at the server unit, while only a minimally necessary set of sub-functions of the service application needs to be located at the client unit. Therefore, the second module accessible by and executed through the server unit may be updated, exchanged or similar without potentially cumbersome access and update operations involving the client unit. This allows to reduce efforts in maintaining and adapting functionality of the service application, since the operator of the server unit may access and adapt the second module locally at the server unit.

Particularly in cases where a user operating a client unit only infrequently accesses the server unit, maintaining the service application up-to-date could be difficult, if all functionality of the service application would be maintained at the client unit.

Further, since computationally expensive parts of the service application may be thus located at the server unit, requirements of processing capabilities and storage capabilities and similar at the client unit may be reduced.

After completing the execution of the second module, e.g. including all communications and other operations involved, the server unit generates a completion indicator indicating that the execution of the second module is completed and transmits the completion indicator to the client unit in an operation S207.

At the client unit in an operation S208 the completion indicator is received and, in an operation S209 the first module of the service application is released at the client unit. For example, any processes or operations executed in connection with the first module do not have to be maintained active after receiving the completion indicator. Since the first module is adapted to wait for the completion indicator after execution of the second module, the first module remains active as long as necessary, in order to maintain a synchronization in executing the service application.

It is noted that the outlined operations S201-S209 do not necessarily have to be performed within a single communication session between the server unit and the client unit. It is also possible that some of the operations of Fig. 2 are executed offline or prior to the communication session involving the client side and the server side.

For example, operations S201 at the server unit and S202 at the client unit involving generating the server request for the first module of the service application and receiving the server request may be executed at an arbitrary point in time. For example, in an update operation for updating the functionality of the client unit, a library of server requests could be established, updated or maintained at the client unit or a location accessible by the client unit. In this list of server requests information relating to a plurality of client modules of a plurality of service applications may be kept. The list of server requests may be updated either in regular time intervals or may be updated at times selected by a user operating the client unit.

Accordingly, the first module of the service application may be started at the client unit in operation S203 by selecting the corresponding server request from the maintained list of server requests through the user. This will be further outlined below.

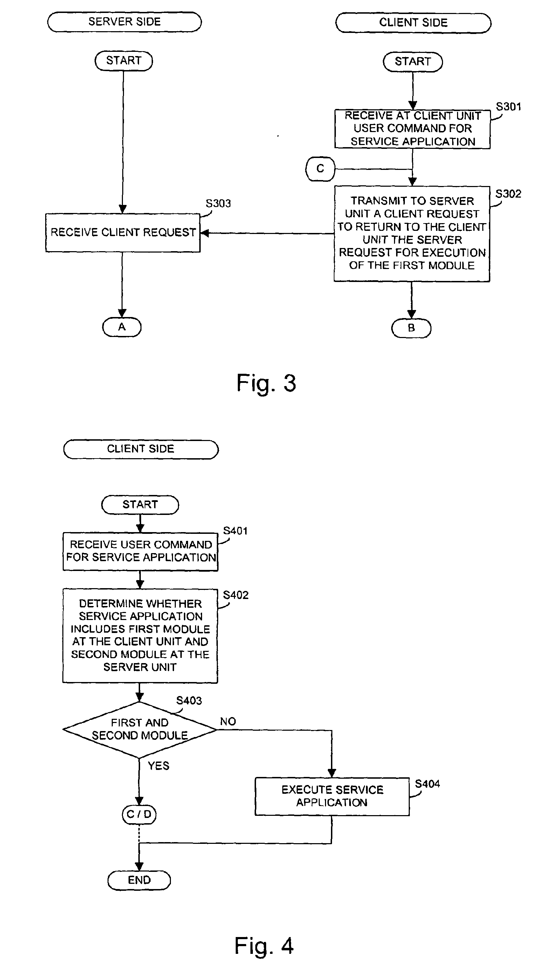

In the following a further embodiment of the invention will be described with respect to Fig. 3.

Fig. 3 illustrates operations at the server unit and the client unit, which may occur prior to the operations outlined with respect to Fig. 2. As before, the operations illustrated in Fig. 3 may be performed using the system shown in Fig. 1, however, Fig. 3 is not limited thereto.

On the left side of Fig. 3 operations at the server unit are illustrated while on the right side of Fig. 3 operations at the client unit are shown.

As outlined before with respect to Fig. 2 initially a communication session between the server unit and the client unit is be established.

In an operation S301 a user inputs a user command for a desired service application, for example visualizing a document, printing a document, rendering a document or similar. It is also possible that a communication session between the client unit and the server unit is established after receiving the user command at the client unit. The user command may be input via a keyboard or may be input by selecting an icon corresponding to the service application on a display unit associated with the client unit.

Thereafter, in an operation S302, the client unit transmits to the server unit a client request, requesting the server unit to return to the client unit the server request for execution of the first module, as outlined with respect to Fig. 2. Thus, upon receiving the user command at the client side, the client unit requests from the server unit to return the server request as outlined in operation S201.

In an operation S303 the server unit receives the client request and may appropriately process or analyze the request. Thereafter, the flow illustrated in Fig. 3 may continue with entry points A and B illustrated in Fig. 2. That is, the flow at the server unit may proceed with operation S201 involving transmitting the server request to the client unit. At the client unit, the flow may proceed with entry point B, involving receiving the server request for the first module in operation S202.

The operations outlined with respect to Fig. 3 allow further flexibility in executing the service application, since the user may enter a command for the service application at the client unit, for triggering the sequence of operations of Figs. 2 and 3 allowing to execute the first module at the client unit, and the second module at the server unit, while maintaining a synchronization in the execution of the modules, i.e., the first module is only released after the completion-indicator was received from the server unit, indicating the completion of execution of the second module at the server unit.

In the following, a further embodiment of the invention will be described with respect to Fig. 4.

Fig. 4 shows operations in providing remote processing for a client unit according to an embodiment of the invention, particularly allowing to categorize service applications. The operations outlined with respect to Fig. 4 may be carried out using the system described in Fig. 1, however, Fig. 1 is not limited thereto.

In a first operation S401 at the client unit a user command for a service application is received, for example as outlined with respect to operation S401.

Subsequently, in an operation S402 the client unit determines whether the requested service application includes a first module at the client unit and a second module at the server unit. It is noted that a service application may well include further modules at the client unit and/or the server unit.

The determining operation may include retrieving and analyzing information on the service application, either from a local storage unit or a storage unit arranged at a remote location. It is also possible that the determining operation includes retrieving information on the service application from the server unit or a storage unit connected to the server unit.

The information on the service application may include identifiers on the modules included in the application and/or identifiers of locations, e.g. storage locations, maintaining the individual modules of the service application.

In an operation S403 it is determined whether at least a first and second module is available. This may include retrieving information specifying the service application, for example information included in the service application or retrieved from a data base storing information on service applications.

If in operation S403 the decision is "NO", indicating that the service application does not include a client module and a server module, the service application is executed in an operation S404, e.g. as known in the art. This may involve executing the service application locally at the client unit or may include executing the service application at another location, e.g. the server unit.

If in operation S403 the decision is "YES", indicating that a first and second module is available, the flow may continue at entry point C of Fig. 3, i.e., the flow of operations may continue with operation S302 of Fig. 3.

The flow of operation may also continue with entry point D of Fig. 2, i.e., the flow of operations may continue with operation S203 of Fig. 2.

The operations described with respect to Fig. 4 advantageously allow to detect whether a requested service application includes at least a first and second module according to the invention, or whether the service application is a known service application which can be carried out as known in the art.

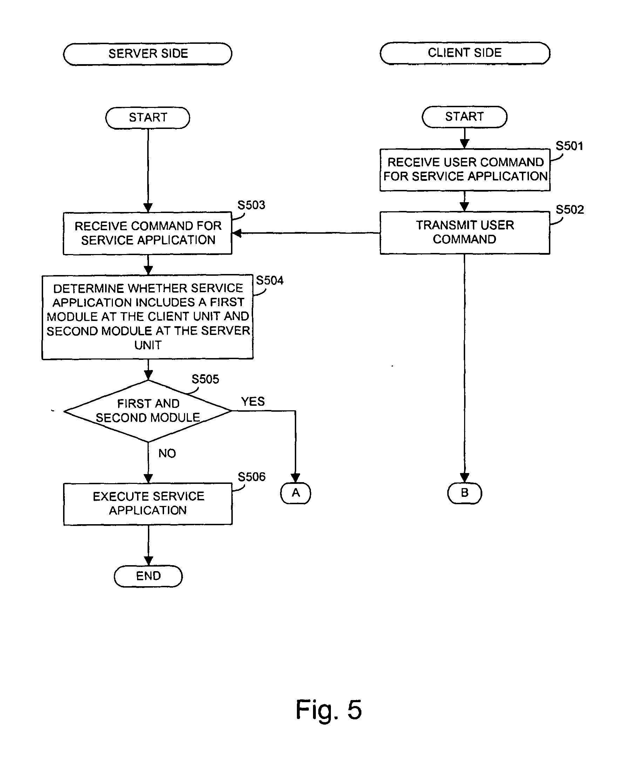

In the following, a further embodiment of the invention will be described with respect to Fig. 5.

Fig. 5 illustrates operations for determining whether a service application includes a first and second module according to another embodiment of the invention. The operations of Fig. 5 may be carried out using the system shown in Fig. 1, however, Fig. 5 is not limited thereto.

In the first operation S501 a user command for a required service application is received at the client unit, for example as outlined with respect to previous embodiments.

In an operation S502 the user command is transmitted to the server unit, where it is received in an operation S503.

Subsequently, in an operation S504 it is determined at the server unit whether the service application includes a first module at the client unit and a second module at the server unit, similar to what was outlined with respect to operation S402 of Fig. 4.

In an operation S505 it is decided whether a first and second module is available. If in operation S505 the decision is "NO", in an operation S506 the service application is executed, for example as known in the art, e.g. as outlined with respect to Fig. 4, operation S404.

If in operation S505 the decision is "YES", indicating that at least a first and second module is available, the flow at the server unit may continue at entry point A of Fig. 2, i.e., the flow of operations may continue with operation S201 of Fig. 2. Further, subsequent to operation S502 the flow of operations at the client unit may continue at entry point B of Fig. 2, i.e. the flow of operations may continue with operation S202 of Fig. 2.

The outlined embodiment allows to determine at the server unit whether the service application is a prior art service application or includes a first module at the client unit and a second module at the server unit according to the invention.

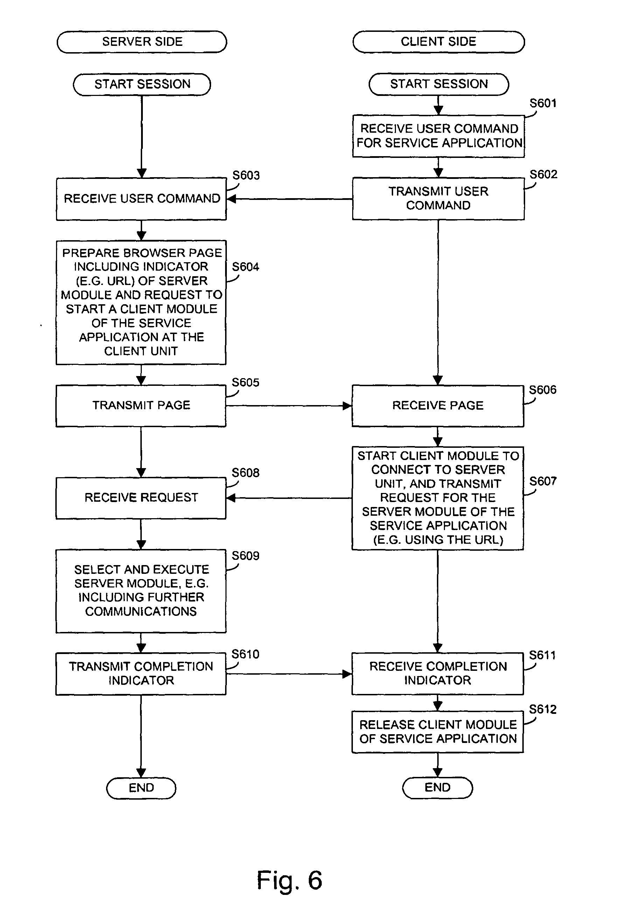

In the following a further embodiment of the invention will be described with respect to Fig. 6.

Fig. 6 illustrates operations carried out at a client unit and a server unit according to another embodiment of the invention for maintaining a synchronization during executing a service application. The operations of Fig. 6 may be carried out using the system of Fig. 1, however, Fig. 6 is not limited thereto.

Initially a communication session between the client unit and the server unit may be initialized, e.g. upon request by a user operating the client unit.

At the client unit a browser application may be started for controlling the communication session between the server unit and the client unit. A browser application may be any application available for browsing information on computer networks such as the Internet. The browser may be adapted to use URLs (Uniform Resource Locators) to specify and retrieve information.

A client module of the requested service application may be constituted by a plug-in or applet, which may be started upon loading a browser page into the browser application executed at the client unit. Further, the client module to be executed at the client unit may be constituted by an active X control.

The server module of the service application may be constituted by a servlet, such as a JAVA-servlet, may be written as ASP (Active Server Page) or may be constituted by native server code.

In an operation S601 a user command for a service application is received at the client unit, for example as outlined with respect to previous embodiments. In an operation S602 the user command is transmitted to the server unit, for example including information on the type and/or characteristics of the service application for example the user command could include requesting a print service application and specifying a location for printing the information and further parameters required for printing the information.

The user command and further information, if provided, is received at the server unit in an operation S603. At the server unit the user command, and, if included, the information on the service application is analyzed. This may include retrieving information on a client module to be executed at the client unit and a server module to be executed at the server unit.

In an operation S604 the server unit prepares a server request including an indicator of the server module and information instructing the execution of the client module of the service application at the client unit. For example, the server unit may prepare a browser page including an indicator (Uniform Resource Locator) of the server module specified in a URL. This may be particularly convenient, as many browsers for browsing information on computer networks include URLs to specify and retrieve information.

In an operation S605 the browser page is transmitted to the client side where it is received in an operation S606.

In an operation S607 the client module is started at the client unit, e.g. upon loading the browser page into the browser. The browser page may also include program applets, such as JAVA applets, supporting starting the client module of the service application. Then, in operation S607 the client module generates the request for the server module of the service application, which may include the URL received in operation S606 from the server unit.

If a URL specifying the server module of the service application was not included into the server request received in operation S606, in alternative embodiment the URL may be locally generated at the client unit or may be retrieved from a third location.

Then the request for the server module is transmitted to the server unit where it is received in an operation S608.

In an operation S609 at the server unit the request is analyzed, and based on the information on the server module, e.g. the URL specifying the server module, the server module is selected, for example from a list of modules available at the server unit. Then the server module is executed at the server unit, as for example outlined with respect to previous embodiments. For example, the server module may be scripted or processed at the server unit.

For example, the server module may be scripted at the server processing unit, for example server processing unit 11 of Fig. 1, in case the server module is for example constituted by a servlet or an active server page. Executing the server module may include further communications with the client unit and other units, as outlined before.

Thereafter, in an operation S610, after completion of operations in association with the server module, a completion indicator is generated at the server side and transmitted to the client side where it is received in an operation S611. The completion indicator may be included in a response to the URL received from the client unit.

Thus, since the URL specifying the server module was transmitted from the client unit, the client unit will maintain the client module active as long as a response to the URL is not returned to the client unit, even if another page is loaded into the browser. Thus, the client module remains active as long as the completion indicator, for example included in an expected response to the URL, is not received.

After receiving the completion indicator in an operation S612 the client module of the service application is released at the client unit, e.g., the URL sent from the client module is served by the completion indicator.

The operations outlined with respect to Fig. 6 advantageously allow to employ URLs in executing the service application. Since a client module, e.g. a plug-in or applet only remains active until another page is loaded into the server, transmitting the URL from the client module to the server unit and expecting a response to the URL, i.e. the completion indicator, effects that the client module is maintained active at the client unit until the completion indicator is received. Thus, a synchronization between the client unit and the server unit in executing the requested service application may be maintained, as required.

It is noted that the features and processing operations described with respect to the previous embodiments may be realized by dedicated hardware units or may be realized as at least one program unit including a plurality of sequences of code instructions executed on data processing units, such as the server unit and/or the client unit, including further data processing units. It is also possible that parts of the above operations are carried out in hardware whereas other parts of the above operations are carried out using software.

Still further, it is noted that a computer readable medium may be provided having a program recorded thereon where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a program product may be provided comprising the computer readable medium.

In a further embodiment, a client unit may have the following elements.
1). Client unit for remote processing in a client and server system, including
   - a code section containing instructions to receive from a server unit a server request to execute a first module of a service application;
   - a code section containing instructions to execute the first module of the service application including transmitting a first client request with an indicator of a second module of the service application to the server unit, to instruct the server unit to execute the second module of the service application;
   - a code section containing instructions to receive a completion indicator from the server unit, indicating that the execution of the second module of the service application is completed; and
   - a code section containing instructions to release the first module of the service application after the completion indicator is received.
2). Client unit for remote processing in a client and server system of 1), including a code section containing instructions to receive a user command to execute the service application, and a code section containing instructions to transmit to the server unit a second client request to instruct the server unit to return to the client unit the server request;
3). Client unit for remote processing in a client and server system of 1), wherein the server request from the server unit includes an identifier of the second module of the service application.
4). Client unit for remote processing in a client and server system of 1), including a code section containing instructions for a communication between the server unit and the client unit in connection with the execution of the service application (e.g. data to be printed) prior to receiving the completion indicator at the client unit.
5). Client unit for remote processing in a client and server system of 1), including a code section containing instructions to determine whether the service application includes the first and second module.
6). Client unit for remote processing in a client and server system of 1),
   - wherein the server request to execute the first module of the service application is included in a browser page and includes a URL (uniform resource locator) associated with the second module;
   - a code section containing instructions is included to execute the first module of the service application, to return the URL to the server unit in order to instruct the server unit to execute the second module of the service application; and
   - the completion indicator received at the client unit is included in a response to the received URL from the server unit.
7). Client unit for remote processing in a client and server system of 1), wherein
   - the first module of the service application is constituted by a plug-in or applet, and the client processing unit is adapted to start the plug-in or applet by loading the browser page in a browser application executed by the client processing unit; and
   - the second module of the service application is constituted by a servlet scripted at the server unit.
8). Client unit for remote processing in a client and server system of 1), wherein a service application includes at least one of the group consisting of
   - a print operation for printing information;
   - a visualization operation for visualizing information at the client unit;
   - a storing operation for storing information at the client unit or at the server unit;
   - a rendering operation for rendering a data file (different formats); and
   - mathematical or logical operations.
   In a further embodiment, a server unit may have the following elements.
9). Server unit for remote processing in a client and server system, including
   - a code section containing instructions to transmit to a client unit an server request to execute a first module of a service application and to receive a first client request instructing to execute a second module of the service application;
   - a code section containing instructions to execute the second module of the service application and to generate a completion indicator indicating that the execution of the second module of the service application is completed; and
   - a code section containing instructions to transmit the completion indicator to the client unit in order to notify the client unit that the first module of the service application may be released.
10). Server unit for remote processing in a client and server system of 9), including a code section containing instructions to receive a second client request instructing the server unit to return to the client unit the server request;
11). Server unit for remote processing in a client and server system of 9), wherein the server request includes an identifier of the second module of the service application.
12). Server unit for remote processing in a client and server system of 9), including a code section containing instructions to determine whether the service application includes the first and second module.
13). Server unit for remote processing in a client and server system of 9), including
   - a code section containing instructions to include the server request and a URL (uniform resource locator) associated with the second module into a browser page and to transmit the browser page to the client unit;
   - a code section containing instructions to receive the URL with the first client request for instructing the server unit to execute the second module of the service application; and
   - a code section containing instructions to include the completion indicator for the client unit into a response to the received URL.
14). Server unit for remote processing in a client and server system of 9), wherein
   - the first module of the service application is constituted by a plug-in or applet, and the client processing unit is adapted to start the plug-in or applet by loading the browser page in a browser application executed by the client processing unit; and
   - the second module of the service application is constituted by a servlet scripted at the server unit.

Having described several embodiments of the invention in detail, various modifications and improvements will readily occur to those skilled in the art. Accordingly, the foregoing description is by way of example only, and is not intended as limiting.

## Claims

1. Method for remote processing at a client unit (20) in a client and server system, including
- receiving from a server unit (10) a server request to execute a first module (211) of a service application;
- executing the first module (211) of the service application at the client unit (20) including transmitting a first client request to the server unit (10) including an indicator of a second module (111) of the service application, to instruct the server unit (10) to execute the second module (111) of the service application;
- receiving a completion indicator (33) from the server unit (10) at the client unit (20), to notify the client unit (20) that the execution of the second module (111) of the service application is completed; and
- releasing the first module (211) at the client unit (20) of the service application after the completion indicator (33) is received, the first module (211) being adapted to wait for the completion indicator (33) in case an operation to unload the first module is executed at the client unit.

2. Method for remote processing at a client unit (20) according to claim 1, including
- receiving at the client unit (20) a user command to execute the service application; and
- transmitting to the server unit (10) a second client request instructing the server unit (10) to return to the client unit (20) the server request to execute the first module (211) of the service application.

3. Method for remote processing at a client unit (20) according to one of the preceding claims, wherein the server request includes an identifier of the second module (111) of the service application.

4. Method for remote processing at a client unit (20) according to one of the preceding claims, wherein the client unit (20) communicates with the server unit (10) in connection with the execution of the service application prior to receiving the completion indicator (33) at the client unit (20).

5. Method for remote processing at a client unit (20) according to one of the preceding claims, including determining whether the service application includes the first and second module (111).

6. Method for remote processing at a client unit (20) according to one of the preceding claims, wherein
- the server request to execute the first module (211) of the service application is included in a browser page and includes a URL (uniform resource locator) associated with the second module (111);
- the first module (211) of the service application returns the URL to the server unit (10) to instruct the server unit (10) to execute the second module (111) of the service application; and
- the completion indicator (33) received at the client unit (20) is included in a response to the received URL from the server unit (10).

7. Method for remote processing at a server unit (10) in a client and server system, including
- generating a server request for a first module (211) of a service application;
- transmitting the server request to a client unit (20) to instruct the execution of the first module (211) at the client unit (20) including generating a first client request for a second module (111) of the service application;
- receiving the first client request and executing the second module (111) of the service application at the server unit (10);
- generating a completion indicator (33), indicating that the second module (111) of the service application is completed; and
- transmitting the completion indicator (33) to the client unit (20) to notify the client unit (20) that the first module (211) of the service application, which is adapted to wait for the completion indicator (33) in case an operation to unload the first module is executed at the client unit, may be released.

8. Method for remote processing at a server unit (10) according to claim 7, including receiving a second client request from the client unit (20), instructing the server unit (10) to return to the client unit (20) the server request.

9. Method for remote processing at a server unit (10) according to one of the claims 7 - 8, wherein the server request includes an identifier of the second module (111) of the service application.

10. Method for remote processing at a server unit (10) according to one of the claims 7 - 9, wherein the server unit (10) communicates with the client unit (20) in connection with the execution of the service application prior to transmitting the completion indicator (33) to the client unit (20).

11. Method for remote processing at a server unit (10) according to one of the claims 7 - 10, including determining whether the service application includes the first and second module (111).

12. Method for remote processing at a server unit (10) according to one of the claims 7 - 11, including
- including the server request and a URL (uniform resource locator) associated with the second module (111) into a browser page and transmitting the browser page to the client unit (20);
- receiving the URL with the first client request for instructing the server unit (10) to execute the second module (111) of the service application; and
- including the completion indicator (33) for the client unit (20) into a response to the received URL.

13. Method for remote processing at a server unit (10) according to claim 12, wherein
- the first module (211) of the service application is constituted by a plug-in or applet, which is started by loading the browser page in a browser application executed at the client unit (20); and
- the second module (111) of the service application is constituted by a servlet scripted at the server unit (10).

14. Method for remote processing at a server unit (10) according to one of the claims 7 - 13, wherein the service application includes at least one of the group consisting of
- a print operation for printing information;
- a visualization operation for visualizing information at the client unit (20);
- a storing operation for storing information at the client unit (20) or at the server unit (10);
- a rendering operation for rendering a data file; and
- mathematical or logical operations.

15. A program having instructions adapted to carry out all of the method steps of one of the preceding claims.

16. A computer readable medium, having a program recorded thereon, where the program is adapted to make a client serves system compressing a client unit and server unit execute all of the method steps of one of the claims 1 - 14.

17. A computer program product comprising the computer readable medium according to claim 16.

18. Client unit (20) for remote processing in a client and server system, including
- a client communication unit (22) adapted to receive from a server unit (10) a server request to execute a first module (211) of a service application;
- a client processing unit (21) adapted to execute the first module (211) of the service application including transmitting a first client request with an indicator of a second module (111) of the service application to the server unit (10), to instruct the server unit (10) to execute the second module (111) of the service application;
- wherein the client communication unit (22) is adapted to receive a completion indicator (33) from the server unit (10), indicating that the execution of the second module (111) of the service application is completed; and
- the first module (211) is adapted to wait for the completion indicator (33) in case an operation to unload the first module is executed at the client unit and the client processing unit is adapted to release the first module (211) of the service application after the completion indicator (33) is received.

19. Client unit (20) for remote processing in a client and server system according to claim 18, wherein the client communication unit (22) is adapted to receive a user command to execute the service application, and to transmit to the server unit (10) a second client request to instruct the server unit (10) to return to the client unit (20) the server request.

20. Client unit (20) for remote processing in a client and server system according to one of the claims 18 and 19, wherein the server request from the server unit (10) includes an identifier of the second module (111) of the service application.

21. Client unit (20) for remote processing in a client and server system according to one of the claims 18 to 20, adapted to communicate with the server unit (10) in connection with the execution of the service application prior to receiving the completion indicator (33) at the client unit (20).

22. Client unit (20) for remote processing in a client and server system according to one of the claims 18 to 21, including means to determine whether the service application includes the first and second module (111).

23. Client unit (20) for remote processing in a client and server system according to one of the claims 18 to 22, wherein
- the server request to execute the first module (211) of the service application is included in a browser page and includes a URL (uniform resource locator) associated with the second module (111);
- the client processing unit executing the first module (211) of the service application is adapted to return the URL to the server unit (10), to instruct the server unit (10) to execute the second module (111) of the service application; and
- the completion indicator (33) received at the client unit (20) is included in a response to the received URL from the server unit (10).

24. Client unit (20) for remote processing in a client and server system according to claim 23, wherein
- the first module (211) of the service application is constituted by a plug-in or applet, and the client processing unit is adapted to start the plug-in or applet by loading the browser page in a browser application executed by the client processing unit; and
- the second module (111) of the service application is constituted by a servlet scripted at the server unit (10).

25. Client unit (20) for remote processing in a client and server system according to one of the claims 18 to 24, wherein the service application includes at least one of the group consisting of
- a print operation for printing information;
- a visualization operation for visualizing information at the client unit (20);
- a storing operation for storing information at the client unit (20) or at the server unit (10);
- a rendering operation for rendering a data file; and
- mathematical or logical operations.

26. Server unit (10) for remote processing in a client and server system, including
- a server communication unit (12) adapted to transmit to a client unit (20) a server request to execute a first module (211) of a service application and adapted to receive a first client request instructing to execute a second module (111) of the service application;
- a server processing unit (11) adapted to execute the second module (111) of the service application and to generate a completion indicator (33) indicating that the execution of the second module (111) of the service application is completed; and
- wherein the server communication unit (12) is adapted to transmit the completion indicator (33) to the client unit (20), to notify the client unit (20) that the first module (211) of the service application, which is adapted to wait for the completion indicator (33) in case an operation to unload the first module is executed at the client unit, may be released.

27. Server unit (10) for remote processing in a client and server system according to claim 26, wherein the server communication unit (12) is adapted to receive a second client request instructing the server unit (10) to return to the client unit (20) the server request;

28. Server unit (10) for remote processing in a client and server system according to one of the claims 26 and 27, wherein the server request includes an identifier of the second module (111) of the service application.

29. Server unit (10) for remote processing in a client and server system according to one of the claims 26 to 28, adapted to communicate with the client unit (20) in connection with the execution of the service application prior to receiving the completion indicator (33) at the client unit (20).

30. Server unit (10) for remote processing in a client and server system according to one of the claims 26 to 29, including means to determine whether the service application includes the first and second module (111).

31. Server unit (10) for remote processing in a client and server system according to one of the claims 26 to 30, including
- means to include the server request and a URL (uniform resource locator) associated with the second module (111) into a browser page and to transmit the browser page to the client unit (20);
- wherein the server communication means is adapted to receive the URL with the first client request for instructing the server unit (10) to execute the second module (111) of the service application; and
- the server communication means is adapted to include the completion indicator (33) for the client unit (20) into a response to the received URL.

32. Server unit (10) for remote processing in a client and server system according to claim 31, wherein
- the first module (211) of the service application is constituted by a plug-in or applet, and the client processing unit is adapted to start the plug-in or applet by loading the browser page in a browser application executed by the client processing unit; and
- the second module (111) of the service application is constituted by a servlet scripted at the server unit (10).

33. Server unit (10) for remote processing in a client and server system according to one of the claims 26 to 32, wherein the service application includes at least one of the group consisting of
- a print operation for printing information;
- a visualization operation for visualizing information at the client unit (20);
- a storing operation for storing information at the client unit (20) or at the server unit (10);
- a rendering operation for rendering a data file; and
- mathematical or logical operations.

## Patentansprüche

1. Verfahren zum entferntgelegenen Verarbeiten an einer Clienteinheit (20) in einem Client- und Serversystem, mit:
- Empfangen einer Serveranforderung von einer Servereinheit (10), um ein erstes Modul (211) einer Dienstanwendung auszuführen;
- Ausführen des ersten Moduls (211) der Dienstanwendung an der Clienteinheit (20) einschließlich Übertragen einer ersten Client-Anforderung an die Servereinheit (10) einschließlich eines Anzeigers eines zweiten Moduls (111) der Dienstanwendung, um die Servereinheit (10) anzuweisen, dass zweite Modul (111) der Dienstanwendung auszuführen;
- Empfangen eines Vollständigkeitsanzeigers (33) von der Servereinheit (10) an der Clienteinheit (20), um die Clienteinheit (20) zu benachrichtigen, dass die Ausführung des zweiten Moduls (111) der Dienstanwendung vollständig ist; und
- das Freigeben des ersten Moduls (211) an der Clienteinheit (20) der Dienstanwendung nachdem der Vollständigkeitsanzeiger (33) empfangen wird, wobei das erste Modul (211) angepasst ist, auf den Vollständigkeitsanzeiger (33) zu warten, falls ein Betrieb, das erste Modul zu entladen, an der Clienteinheit ausgeführt wird.

2. Verfahren zum entferntgelegenen Verarbeiten an einer Clienteinheit (20) nach Anspruch 1, einschließlich:
- Empfangen eines Benutzerbefehls an der Clienteinheit (20) um die Dienstanwendung auszuführen; und
- Übertragen einer zweiten Clientanforderung an die Servereinheit (10), die die Servereinheit (10) anweist, die Serveranfrage an die Clienteinheit (20) zurück zu übertragen, um das erste Modul (211) der Dienstanwendung auszuführen.

3. Verfahren zum entferntgelegenen Verarbeiten an einer Clienteinheit (20) nach einem der vorhergehenden Ansprüche, wobei die Serveranforderung einen Identifikator des zweiten Moduls (111) der Dienstanwendung umfasst.

4. Verfahren zum entferntgelegenen Verarbeiten an einer Clienteinheit (20) nach einem der vorhergehenden Ansprüche, wobei die Clienteinheit (20) mit der Servereinheit (10) in Verbindung mit der Ausführung der Dienstanwendung vor dem Empfangen des Vollständigkeitsanzeigers (33) an der Clienteinheit (20) kommuniziert.

5. Verfahren zum entferntgelegenen Verarbeiten an einer Clienteinheit (20) nach einem der vorhergehenden Ansprüche, einschließlich Bestimmen, ob die Dienstanwendung das erste und zweite Modul (111) umfasst.

6. Verfahren zum entferntgelegenen Verarbeiten an einer Clienteinheit (20) nach einem der vorhergehenden Ansprüche, wobei
- die Serveranforderung das erste Modul (211) der Dienstanwendung auszuführen, auf einer Browserseite umfasst ist und eine mit dem zweiten Modul (111) verknüpfte URL (einheitlicher Ressourcenlokator) umfasst;
- das erste Modul (211) der Dienstanwendung die URL an die Servereinheit (10) zurückgibt, um die Servereinheit (10) anzuweisen, das zweite Modul (111) der Dienstanwendung auszuführen; und
- der an der Clienteinheit (20) empfangene Vollständigkeitsanzeiger (33) in einer Antwort auf die von der Servereinheit (10) empfangene URL umfasst ist.

7. Verfahren zum entferntgelegenen Verarbeiten an einer Servereinheit (10) in einem Client- und Serversystem, einschließlich:
- Erzeugen einer Serveranforderung für ein erstes Modul (211) einer Dienstanwendung;
- Übertragen der Serveranforderung an eine Clienteinheit (20), um die Ausführung des ersten Moduls (211) an der Clienteinheit (20) einschließlich des Erzeugens einer ersten Clientanforderung für ein zweites Modul (111) der Dienstanwendung anzuweisen;
- Empfangen der ersten Clientanforderung und Ausführen des zweiten Moduls (111) der Dienstanwendung an der Servereinheit (10);
- Erzeugen eines Vollständigkeitsanzeigers (33), der anzeigt, dass das zweite Modul (111) der Dienstanwendung vollständig ist; und
- Übertragen des Vollständigkeitsanzeigers (33) an die Clienteinheit (20), um die Clienteinheit (20) zu benachrichtigen, dass das erste Modul (211) der Dienstanwendung, das angepasst ist, auf den Vollständigkeitsanzeiger (33) zu warten, falls ein Betrieb, um das erste Modul zu entladen an der Clienteinheit ausgeführt wird, freigegeben werden kann.

8. Verfahren zum entferntgelegenen Verarbeiten an einer Servereinheit (10) nach Anspruch 7, einschließlich Empfangen einer zweiten Clientanforderung von der Clienteinheit (20), die die Servereinheit (10) anweist, die Serveranforderung an die Clienteinheit (20) zurückzugeben.

9. Verfahren zum entferntgelegenen Verarbeiten an einer Servereinheit (10) nach einem der Ansprüche 7-8, wobei die Serveranforderung einen Identifikator des zweiten Moduls (111) der Dienstanwendung umfasst.

10. Verfahren zum entferntgelegenen Verarbeiten an einer Servereinheit (10) nach einem der Ansprüche 7-9, wobei die Servereinheit (10) mit der Clienteinheit (20) in Verbindung mit der Ausführung der Dienstanwendung vor dem Übertragen des Vollständigkeitsanzeigers (33) an die Clienteinheit (20) kommuniziert.

11. Verfahren zum entferntgelegenen Verarbeiten an einer Servereinheit (10) nach einem der Ansprüche 7-11, einschließlich Bestimmen, ob die Dienstanwendung das erste und zweite Modul (111) umfasst.

12. Verfahren zum entferntgelegenen Verarbeiten an einer Servereinheit (10) nach einem der Ansprüche 7-11, einschließlich:
- Umfassen der Serveranforderung und einer mit dem zweiten Modul (111) verknüpften URL (einheitlicher Ressourcenlokator) in einer Browserseite und Übertragen der Browserseite an die Clienteinheit (20) ;
- Empfangen der URL mit der ersten Clientanforderung zum Anweisen der Servereinheit (10), das zweite Modul (111) der Dienstanwendung auszuführen; und
- Umfassen des Vollständigkeitsanzeigers (33) für die Clienteinheit (20) in einer Antwort an die empfangene URL.

13. Verfahren zum entferntgelegenen Verarbeiten an einer Servereinheit (10) nach Anspruch 12, wobei
- das erste Modul (211) der Dienstanwendung durch ein Plug-in oder Applet gebildet ist, welches durch Laden der Browserseite in einer an der Clienteinheit (20) ausgeführten Browseranwendung gestartet wird; und
- das zweite Modul (111) der Dienstanwendung durch ein an der Servereinheit (10) geschriebenes Servlet gebildet ist.

14. Verfahren zum entferntgelegenen Verarbeiten an einer Servereinheit (10) nach einem der Ansprüche 7-13, wobei die Dienstanwendung zumindest ein Element der Gruppe umfasst, die besteht aus:
- ein Druckbetrieb zum Drucken von Informationen;
- ein Visualisierungsbetrieb zum Visualisieren der Information an der Clienteinheit (20);
- ein Speicherbetrieb zum Speichern von Information an der Clienteinheit (20) oder an der Servereinheit (10) ;
- ein Wiedergabebetrieb zum Wiedergeben eines Datenfiles; und
- mathematischen oder logischen Operationen.

15. Programm mit Anweisungen angepasst, um all die Verfahrensschritte eines der vorhergehenden Ansprüche auszuführen.

16. Computerlesbares Medium mit einem darauf aufgezeichneten Programm, wobei das Programm angepasst ist, ein Clientserversystem mit einer Clienteinheit und einer Servereinheit alle die Verfahrensschritte eines der Ansprüche 1-14 ausführen zu lassen.

17. Computerprogrammprodukt mit dem computerlesbaren Medium nach Anspruch 16.

18. Clienteinheit (20) zum entferntgelegenen Verarbeiten in einem Client- und Serversystem, einschließlich:
- einer Clientkommunikationseinheit (22) angepasst, um von einer Servereinheit (10) eine Serveranforderung zu empfangen, um ein erstes Modul (211) einer Dienstanwendung auszuführen;
- einer Clientprozesseinheit (21) angepasst, um das erste Modul (211) der Dienstanwendung auszuführen, einschließlich Übertragen einer ersten Clientanforderung mit einem Anzeiger eines zweiten Moduls (111) der Dienstanwendung an die Servereinheit (10), um die Servereinheit (10) anzuweisen, dass zweite Modul (111) der Dienstanwendung auszuführen;
- wobei die Clientkommunikationseinheit (22) angepasst ist, an einen Vollständigkeitsanzeiger (33) von der Servereinheit (10) zu empfangen, der anzeigt, dass die Ausführung des zweiten Moduls (111) der Dienstanwendung vollständig ist; und
- das erste Modul (211) angepasst ist, auf den Vollständigkeitsanzeiger (33) zu warten, falls ein Betrieb das erste Modul zu entladen an der Clienteinheit ausgeführt wird und die Clientprozesseinheit angepasst ist, das erste Modul (211) der Dienstanwendung freizugeben, nachdem der Vollständigkeitsanzeiger (33) empfangen wurde.

19. Clienteinheit (20) zum entferntgelegenen Verarbeiten in einem Client- und Serversystem nach Anspruch 18, wobei die Clientkommunikationseinheit (22) angepasst ist, einen Benutzerbefehl zu empfangen um die Dienstanwendung auszuführen und um an die Servereinheit (10) eine zweite Clientanforderung zu übertragen, um die Servereinheit (10) anzuweisen, die Serveranforderung an die Clienteinheit (20) zurückzugeben.

20. Clienteinheit (20) zum entferntgelegenen Verarbeiten in einem Client- und Serversystem nach einem der Ansprüche 18-19, wobei die Serveranforderung von der Servereinheit (10) einen Identifikator des zweiten Moduls (111) der Dienstanwendung umfasst.

21. Clienteinheit (20) zum entferntgelegenen Verarbeiten in einem Client- und Serversystem nach einem der Ansprüche 18-20 angepasst, um mit der Servereinheit (10) in Verbindung mit der Ausführung der Dienstanwendung vor dem Empfangen des Vollständigkeitsanzeigers (33) an der Clienteinheit (20) zu kommunizieren.

22. Clienteinheit (20) zum entferntgelegenen Verarbeiten in einem Client- und Serversystem nach einem der Ansprüche 18-21 einschließlich Vorrichtungen, um zu bestimmen, ob die Dienstanwendung das erste und zweite Modul (111) umfasst.

23. Clienteinheit (20) zum entferntgelegenen Verarbeiten in einem Client- und Serversystem nach einem der Ansprüche 18-22, wobei
- die Serveranforderung, das erste Modul (211) der Dienstanwendung auszuführen, in einer Browserseite umfasst ist und eine mit dem zweiten Modul (111) verknüpfte URL (einheitlicher Ressourcenlokator) umfasst;
- die Clientverarbeitungseinheit, die das erste Modul (211) der Dienstanwendung ausführt, angepasst ist, die URL an die Servereinheit (10) zurückzugeben, um die Servereinheit (10) anzuweisen, das zweite Modul (111) der Dienstanwendung auszuführen; und
- der an der Clienteinheit (20) empfangene Vollständigkeitsanzeiger (33) in einer Antwort auf die von der Servereinheit (10) empfangener URL umfasst ist.

24. Clienteinheit (20) zum entferntgelegenen Verarbeiten in einem Client- und Serversystem nach dem Anspruch 23, wobei
- das erste Modul (211) der Dienstanwendung durch ein Plug-in oder Applet gebildet ist und die Clientverarbeitungseinheit angepasst ist, das Plug-in oder Applet durch Laden der Browserseite in einer durch die Clientverarbeitungseinheit ausgeführten Browseranwendung zu starten; und
- das zweite Modul (111) der Dienstanwendung durch ein an der Servereinheit (10) beschriebenes Servlet gebildet ist.

25. Clienteinheit (20) zum entferntgelegenen Verarbeiten in einem Client- und Serversystem nach einem der Ansprüche 18-24, wobei die Dienstanwendung zumindest ein Element der Gruppe umfasst, die besteht aus:
- ein Druckbetrieb zum Drucken von Information;
- ein Visualisierungsbetrieb zum Visualisieren von Informationen an der Clienteinheit (20);
- ein Speicherbetrieb zum Speichern von Information an der Clienteinheit (20) oder an der Servereinheit (10) ;
- ein Wiedergabebetrieb zum Wiedergeben eines Datenfiles;
- mathematischen oder logischen Operationen.

26. Servereinheit (10) zum entferntgelegenen Verarbeiten in einem Client- und Serversystem einschließlich:
- einer Serverkommunikationseinheit (12) angepasst, eine Serveranforderung an die Clienteinheit (20) zu übertragen, um ein erstes Modul (211) einer Dienstanwendung auszuführen und angepasst, eine erste Clientanforderung zu empfangen, die anweist ein zweites Modul (111) der Dienstanwendung auszuführen;
- einer Serververarbeitungseinheit (11) angepasst, das zweite Modul (111) der Dienstanwendung auszuführen und einen Vollständigkeitsanzeiger (33) zu erzeugen, der anzeigt, dass die Ausführung des zweiten Moduls (111) der Dienstanwendung vollständig ist; und
- wobei die Serverkommunikationseinheit (12) angepasst ist, den Vollständigkeitsanzeiger (33) an die Clienteinheit (20) zu übertragen, um die Clienteinheit (20) zu benachrichtigen, dass das erste Modul (211) der Dienstanwendung, die angepasst ist, auf den Vollständigkeitsanzeiger (33) zu warten, falls ein Betrieb das erste Modul zu entladen an der Clienteinheit ausgeführt wird, freigegeben werden kann.

27. Servereinheit (10) zum entferntgelegenen Verarbeiten in einem Client- und Serversystem nach Anspruch 26, wobei die Serverkommunikationseinheit (12) angepasst ist, eine zweite Clientanforderung zu empfangen, die die Servereinheit (10) anweist, die Serveranforderung an die Clienteinheit (20) zurückzugeben.

28. Servereinheit (10) zum entferntgelegenen Verarbeiten in einem Client- und Serversystem nach einem der Ansprüche 26 und 27, wobei die Serveranforderung einen Identifikator des zweiten Moduls (111) der Dienstanwendung umfasst.

29. Servereinheit (10) zum entferntgelegenen Verarbeiten in einem Client- und Serversystem nach einem der Ansprüche 26-28 angepasst, um mit der Clienteinheit (20) in Verbindung mit der Ausführung der Dienstanwendung vor dem Empfangen des Vollständigkeitsanzeigers (33) an der Clienteinheit (20) zu kommunizieren.

30. Servereinheit zum entferntgelegenen Verarbeiten in einem Client- und Serversystem nach einem der Ansprüche 26-29, einschließlich Vorrichtungen zum Bestimmen, ob die Dienstanwendung das erste und zweite Modul (111) umfasst.

31. Servereinheit (10) zum entferntgelegenen Verarbeiten in einem Client- und Serversystem nach einem der Ansprüche 26-30, einschließlich:
- Vorrichtungen um die Serveranforderungen und eine mit dem zweiten Modul (111) verbundene URL (einheitlicher Ressourcenlokator) in einer Browserseite zu umfassen und um die Browserseite an die Clienteinheit (20) zu übertragen;
- wobei die Serverkommunikationsvorrichtung angepasst ist, die URL zusammen mit der ersten Clientanforderung zum Anweisen der Servereinheit (10), das zweite Modul (111) der Dienstanweisung auszuführen, zu empfangen; und
- die Serverkommunikationsvorrichtung angepasst ist, den Vollständigkeitsanzeiger (33) für die Clienteinheit (20) in einer Antwort an die empfangene URL zu umfassen.

32. Servereinheit (10) zum entferntgelegenen Verarbeiten in einem Client- und Serversystem nach Anspruch 31, wobei
- das erste Modul (211) der Dienstanwendung durch ein Plug-in oder Applet gebildet ist und die Clientverarbeitungseinheit angepasst ist, das Plug-in oder Applet durch Laden der Browserseite in einer durch die Clientverarbeitungseinheit ausgeführten Browseranwendung zu starten; und
- das zweite Modul (111) der Dienstanwendung durch ein an der Servereinheit (10) geschriebenes Servlet gebildet ist.

33. Servereinheit (10) zum entferntgelegenen Verarbeiten in einem Client- und Serversystem nach einem der Ansprüche 26-32, wobei die Dienstanwendung zumindest ein Element der Gruppe umfasst, die besteht aus:
- ein Druckbetrieb zum Drucken von Information;
- ein Visualisierungsbetrieb zum Visualisieren von Informationen an der Clienteinheit (20);
- ein Speicherbetrieb zum Speichern von Information an der Clienteinheit (20) oder der Servereinheit (10);
- ein Wiedergabebetrieb zum Wiedergeben eines Datenfiles;
- mathematischen oder logischen Operationen.

## Revendications

1. Procédé pour traitement distant au niveau d'une unité client (20) dans un système client/serveur, comprenant les étapes :
- réception depuis une unité serveur (10) d'une requête de serveur pour exécuter un premier module (211) d'une application de service ;
- exécution du premier module (211) de l'application de service au niveau de l'unité client (20), laquelle comprend la transmission d'une première requête de client à l'unité serveur (10) comprenant un indicateur d'un second module (111) de l'application de service, pour donner pour instruction à l'unité serveur (10) d'exécuter le second module (111) de l'application de service ;
- réception d'un indicateur d'achèvement (33) depuis l'unité serveur (10) au niveau de l'unité client (20), pour notifier à l'unité client (20) que l'exécution du second module (111) de l'application de service est achevée ; et
- déclenchement du premier module (211) de l'application de service au niveau de l'unité client (20) après que l'indicateur d'achèvement (33) a été reçu, le premier module (211) étant adapté pour attendre l'indicateur d'achèvement (33) dans le cas où une opération consistant à vider le premier module serait exécutée au niveau de l'unité client.

2. Procédé pour traitement distant au niveau d'une unité client (20) selon la revendication 1, comprenant les étapes :
- réception au niveau de l'unité client (20) d'une commande utilisateur pour exécuter l'application de service ; et
- transmission à l'unité serveur (10) d'une seconde requête de client donnant pour instruction à l'unité serveur (10) de retourner à l'unité client (20) la requête de serveur pour exécuter le premier module (211) de l'application de service.

3. Procédé pour traitement distant au niveau d'une unité client (20) selon l'une des revendications précédentes, dans lequel la requête de serveur comprend un identificateur du second module (111) de l'application de service.

4. Procédé pour traitement distant au niveau d'une unité client (20) selon l'une des revendications précédentes, dans lequel l'unité client (20) communique avec l'unité serveur (10) dans le cadre de l'exécution de l'application de service avant de recevoir l'indicateur d'achèvement (33) au niveau de l'unité client (20).

5. Procédé pour traitement distant au niveau d'une unité client (20) selon une des revendications précédentes, comprenant une étape visant à déterminer si l'application de service comprend le premier et le second module (111).

6. Procédé pour traitement distant au niveau d'une unité client (20) selon l'une des revendications précédentes, dans lequel :
- la requête de serveur pour exécuter le premier module (211) de l'application de service est comprise dans une page de navigateur et comprend une URL (pour "Uniform Resource Locator") associée au second module (111) ;
- le premier module (211) de l'application de service retourne l'URL à l'unité serveur (10) pour donner pour instruction à l'unité serveur (10) d'exécuter le second module (111) de l'application de service ; et
- l'indicateur d'achèvement (33) reçu au niveau de l'unité client (20) est compris dans une réponse à l'URL reçue depuis l'unité serveur (10).

7. Procédé pour traitement distant au niveau d'une unité serveur (10) dans un système client/serveur, comprenant :
- la génération d'une requête de serveur pour un premier module (211) d'une application de service ;
- la transmission de la requête de serveur à une unité client (20) pour donner pour instruction d'exécuter le premier module (211) au niveau de l'unité client (20), comprenant la génération d'une première requête de client pour un second module (111) de l'application de service ;
- la réception de la première requête de client et l'exécution du second module (111) de l'application de service au niveau de l'unité serveur (10) ;
- la génération d'un indicateur d'achèvement (33) indiquant que le second module (111) de l'application de service est achevé ; et
- la transmission de l'indicateur d'achèvement (33) à l'unité client (20) pour notifier à l'unité client (20) que le premier module (211) de l'application de service, qui est adapté pour attendre l'indicateur d'achèvement (33) dans le cas où une opération consistant à vider le premier module serait exécutée au niveau de l'unité client, peut être déclenché.

8. Procédé pour traitement distant au niveau d'une unité serveur (10) selon la revendication 7, comprenant l'étape consistant à recevoir une seconde requête de client depuis l'unité client (20), donnant pour instruction à l'unité serveur (10) de retourner à l'unité client (20) la requête de serveur.

9. Procédé pour traitement distant au niveau d'une unité serveur (10) selon l'une des revendications 7 à 8, dans lequel la requête de serveur comprend un identificateur du second module (111) de l'application de service.

10. Procédé pour traitement distant au niveau d'une unité serveur (10) selon l'une des revendications 7 à 9, dans lequel l'unité serveur (10) communique avec l'unité client (20) dans le cadre de l'exécution de l'application de service avant de transmettre l'indicateur d'achèvement (33) à l'unité client (20).

11. Procédé pour traitement distant au niveau d'une unité serveur (10) selon l'une des revendications 7 à 10, comprenant l'étape visant à déterminer si l'application de service comprend le premier et le second modules (111).

12. Procédé pour traitement distant au niveau d'une unité serveur (10) selon une des revendications 7 à 11, comprenant les étapes consistant à :
- inclure la requête de serveur et une URL (pour "Uniform Resource Locator") associée au second module (111) dans une page de navigateur et transmettre la page de navigateur à l'unité client (20) ;
- recevoir l'URL avec la première requête de client pour donner pour instruction à l'unité serveur (10) d'exécuter le second module (111) de l'application de service ; et
- inclure l'indicateur d'achèvement (33) pour l'unité client (20) dans une réponse à l'URL reçue.

13. Procédé pour traitement distant au niveau d'une unité serveur (10) selon la revendication 12, dans lequel :
- le premier module (211) de l'application de service est constitué d'un plugiciel (pour "plugin") ou d'une mini-application, qui sont lancés en chargeant la page de navigateur dans une application de navigateur exécutée au niveau de l'unité client (20) ; et
- le second module (111) de l'application de service est constitué d'une mini-application serveur scriptée au niveau de l'unité serveur (10).

14. Procédé pour traitement distant au niveau d'une unité serveur (10) selon l'une des revendications 7 à 13, dans lequel l'application de service comprend au moins une application du groupe qui consiste en :
- une opération d'impression pour imprimer des informations ;
- une opération de visualisation pour visualiser des informations au niveau de l'unité client (20) ;
- une opération de stockage pour stocker des informations au niveau de l'unité client (20) ou au niveau de l'unité serveur (10) ;
- une opération de rendu pour mettre en forme un fichier de données ; et
- des opérations mathématiques ou logiques.

15. Programme ayant des instructions adaptées pour exécuter toutes les étapes de procédé selon l'une des revendications précédentes.

16. Support lisible par un ordinateur, sur lequel est enregistré un programme, où le programme est adapté pour qu'un système client/serveur comprenant une unité client et une unité serveur exécute toutes les étapes de procédé selon l'une des revendications 1 à 14.

17. Produit programme informatique comprenant le support lisible par un ordinateur selon la revendication 16.

18. Unité client (20) pour traitement distant dans un système client/serveur comprenant :
- une unité de communication client (22) adaptée pour recevoir, depuis une unité serveur (10), une requête de serveur pour exécuter un premier module (211) d'une application de service ;
- une unité de traitement client (21) adaptée pour exécuter le premier module (211) de l'application de service comprenant la transmission d'une première requête de client avec un indicateur d'un second module (111) de l'application de service à l'unité serveur (10), pour donner pour instruction à l'unité serveur (10) d'exécuter le second module (111) de l'application de service ;
- dans laquelle l'unité de communication client (22) est adaptée pour recevoir un indicateur d'achèvement (33) depuis l'unité serveur (10), laquelle indique que l'exécution du second module (111) de l'application de service est achevée ; et
- le premier module (211) est adapté pour attendre l'indicateur d'achèvement (33) dans le cas où une opération consistant à décharger le premier module serait exécutée au niveau de l'unité client, et l'unité de traitement client est adaptée pour déclencher le premier module (211) de l'application de service après que l'indicateur d'achèvement (33) a été reçu.

19. Unité client (20) pour traitement distant dans un système client/serveur selon la revendication 18, dans laquelle l'unité de communication client (22) est adaptée pour recevoir une commande utilisateur pour exécuter l'application de service, et pour transmettre à l'unité serveur (10) une seconde requête de client pour donner pour instruction à l'unité serveur (10) de retourner à l'unité client (20) la requête de serveur.

20. Unité client (20) pour traitement distant dans un système client/serveur selon l'une des revendications 18 et 19, dans laquelle la requête de serveur provenant de l'unité serveur (10) comprend un identificateur du second module (111) de l'application de service.

21. Unité client (20) pour traitement distant dans un système client/serveur selon l'une des revendications 18 à 20, adaptée pour communiquer avec l'unité serveur (10) dans le cadre de l'exécution de l'application de service avant de recevoir l'indicateur d'achèvement (33) au niveau de l'unité client (20).

22. Unité client (20) pour traitement distant dans un système client/serveur selon l'une des revendications 18 à 21, comprenant un moyen pour déterminer si l'application de service comprend le premier et le second module (111).

23. Unité client (20) pour traitement distant dans un système client/serveur selon l'une des revendications 18 à 22, dans laquelle :
- la requête de serveur pour exécuter le premier module (211) de l'application de service est comprise dans une page de navigateur et comprend une URL (pour "Uniform Resource Locator") associée au second module (111) ;
- l'unité de traitement client exécutant le premier module (211) de l'application de service est adaptée pour retourner l'URL à l'unité serveur (10) pour donner pour instruction à l'unité serveur (10) d'exécuter le second module (111) de l'application de service ; et
- l'indicateur d'achèvement (33) reçu au niveau de l'unité client (20) est compris dans une réponse à l'URL reçue depuis l'unité serveur (10).

24. Unité client (20) pour traitement distant dans un système client/serveur selon la revendication 23, dans laquelle :
- le premier module (211) de l'application de service est constitué d'un plugiciel (pour "plugin") ou d'une mini-application, et l'unité de traitement client est adaptée pour lancer le plugiciel ou la mini-application en chargeant la page de navigateur dans une application de navigateur exécutée par l'unité de traitement client ; et
- le second module (111) de l'application de service est constitué d'une mini-application serveur scriptée au niveau de l'unité serveur (10).

25. Unité client (20) pour traitement distant dans un système client/serveur selon l'une des revendications 18 à 24, dans laquelle l'application de service comprend au moins une application dans le groupe qui consiste en :
- une opération d'impression pour imprimer des informations ;
- une opération de visualisation pour visualiser des informations au niveau de l'unité client (20) ;
- une opération de stockage pour stocker des informations au niveau de l'unité client (20) ou au niveau de l'unité serveur (10) ;
- une opération de rendu pour mettre en forme un fichier de données ; et
- des opérations mathématiques ou logiques.

26. Unité serveur (10) pour traitement distant dans un système client/serveur comprenant :
- une unité de communication serveur (12) adaptée pour transmettre à une unité client (20) une requête de serveur pour exécuter un premier module (211) d'une application de service et adaptée pour recevoir une première requête de client donnant pour instruction d'exécuter un second module (111) de l'application de service ;
- une unité de traitement serveur (11) adaptée pour exécuter le second module (111) de l'application de service et pour générer un indicateur d'achèvement (33) indiquant que l'exécution du second module (111) de l'application de service est achevée ; et
- dans laquelle l'unité de communication serveur (12) est adaptée pour transmettre l'indicateur d'achèvement (33) à l'unité client (20), pour notifier à l'unité client (20) que le premier module (211) de l'application de service, qui est adapté pour attendre l'indicateur d'achèvement (33) dans le cas où une opération consistant à décharger le premier module serait exécutée au niveau de l'unité client, peut être déclenché.

27. Unité serveur (10) pour traitement distant dans un système client/serveur selon la revendication 26, dans laquelle l'unité de communication serveur (12) est adaptée pour recevoir une seconde requête de client donnant pour instruction à l'unité serveur (10) de retourner à l'unité client (20) la requête de serveur.

28. Unité serveur (10) pour traitement distant dans un système client/serveur selon l'une des revendications 26 et 27, dans laquelle la requête de serveur comprend un identificateur du second module (111) de l'application de service.

29. Unité serveur (10) pour traitement distant dans un système client/serveur selon l'une des revendications 26 à 28, adaptée pour communiquer avec l'unité client (20) dans le cadre de l'exécution de l'application de service avant de recevoir l'indicateur d'achèvement (33) au niveau de l'unité client (20).

30. Unité serveur (10) pour traitement distant dans un système client/serveur selon l'une des revendications 26 à 29, comprenant un moyen pour déterminer si l'application de service comprend le premier et le second modules (111).

31. Unité serveur (10) pour traitement distant dans un système client/serveur selon l'une des revendications 26 à 30, comprenant :
- un moyen pour inclure la requête de serveur et une URL (pour "Uniform Resource Locator") associée au second module (111) dans une page de navigateur et transmettre la page de navigateur à l'unité client (20) ;
- dans laquelle le moyen de communication serveur est adapté pour recevoir l'URL avec la première requête de client pour donner pour instruction à l'unité serveur (10) d'exécuter le second module (111) de l'application de service ; et
- le moyen de communication serveur est adapté pour inclure l'indicateur d'achèvement (33) pour l'unité client (20) dans une réponse à l'URL reçue.

32. Unité serveur (10) pour traitement distant dans un système client/serveur selon la revendication 31, dans laquelle :
- le premier module (211) de l'application de service est constitué d'un plugiciel (pour "plugin") ou d'une mini-application, et l'unité de traitement client est adaptée pour lancer le plugiciel ou la mini-application en chargeant la page de navigateur dans une application de navigateur exécutée par l'unité de traitement client ; et
- le second module (111) de l'application de service est constitué d'une mini-application serveur scriptée au niveau de l'unité serveur (10).

33. Unité serveur (10) pour traitement distant dans un système client/serveur selon l'une des revendications 26 à 32, dans laquelle l'application de service comprend au moins une application dans le groupe qui consiste en :
- une opération d'impression pour imprimer des informations ;
- une opération de visualisation pour visualiser des informations au niveau de l'unité client (20) ;
- une opération de stockage pour stocker des informations au niveau de l'unité client (20) ou au niveau de l'unité serveur (10) ;
- une opération de rendu pour mettre en forme un fichier de données ; et
- des opérations mathématiques ou logiques.
